Europäisches Patentamt

(19) European Patent Office

Office européen des brevets

(11) Publication number: **0 172 715**
**B1**

# (12) EUROPEAN PATENT SPECIFICATION

(45) Date of publication of the patent specification:
**12.04.89**

(51) Int. Cl.⁴: **C01B 33/28**

(21) Application number: **85305692.7**

(22) Date of filing: **12.08.85**

(54) **Process for deactivation of a zeolite.**

(30) Priority: **14.08.84 US 640631**

(43) Date of publication of application:
**26.02.86 Bulletin 86/9**

(45) Publication of the grant of the patent:
**12.04.89 Bulletin 89/15**

(84) Designated Contracting States:
**BE DE FR GB IT NL SE**

(56) References cited:
**DE-B- 1 280 828**
**DE-B- 1 288 569**
**DE-B- 1 518 596**
**FR-A- 2 155 665**
**US-A- 4 273 753**

(73) Proprietor: **MOBIL OIL CORPORATION, 150 East 42nd Street, New York New York 10017(US)**

(72) Inventor: **Dessau, Ralph Moritz, 14 Cellar Road, Edison New Jersey 08817(US)**
Inventor: **Derouane, Eric Gerard, 56 Rue des Champs Verts, B-5020 Namur (Champion)(BE)**
Inventor: **Kerr, George Thompson, 10 Pin Oak Drive, Lawrenceville New Jersey 08648(US)**

(74) Representative: **Cooper, John Anthony et al, Mobil Court 3 Clements Inn, London WC2A 2EB(GB)**

**Description**

This invention relates to the deactivation, i.e., reduction in cracking activity (alpha value), of a zeolite.

Zeolite catalysts containing oxide of boron are disclosed in U.S. Patent No. 4 049 573 to Kaeding. Zeolite crystals in a form substantially free of alkali metal are contacted with a boron compound such as boric acid or boric oxide in such a way as to incorporate at least about 0.25% by weight of the boron oxide in the calcined zeolite.

U.S. Patent No. 4 269 813 to Klotz discloses a crystalline borosilicate which is made from a forming mixture containing an oxide of silicon, an oxide of boron, a hydroxide of an alkali metal or an alkaline earth metal, an alkyl ammonium cation or a precursor of an alkylammonium cation, and water. The resulting materials are useful as hydrocarbon conversion catalysts.

U.S. Patent No. 4 273 753 to Chang discloses a process for dealuminization of aluminosilicates such as zeolites by contacting an aluminosilicate with an inorganic halide or oxyhalide at elevated temperatures. The inorganic halide reacts with framework aluminum to form an aluminum halide which is removed by vaporization at the elevated temperatures. Inorganic halides employed in this process include silicon tetrachloride and phosphorous trichloride.

In accordance with the present invention, there is provided a process for the deactivation of a metallosilicate zeolite, such as aluminosilicate or gallosilicate, which comprises contacting the zeolite with a boron trihalide at temperatures effective to replace the framework of metal atoms such as aluminum or gallium with boron atoms. Such temperatures may range from 100–600°C, preferably 300–500°C. The resulting materials are polymorphs of the original zeolite and have a distinct composition of matter. In those instances where an acidic framework atom such as aluminum or gallium is replaced by boron, the resulting material possesses decreased acidic catalytic activity.

Preferably, the zeolite is an aluminosilicate with a silica to alumina ratio less than 1000 and preferably less than 500.

The degree of zeolite acid activity of a zeolite catalyst can be measured and compared by means of "alpha value". The alpha value reflects the relative activity of the catalyst with respect to a high activity silica-alumina cracking catalyst. To determine the alpha value as such term is used herein, n-hexane conversion is determined at a suitable temperature between about 290 to 540°C (550 to 1000°F), preferably at 540°C (1000°F). Conversion is varied by variation in space velocity such that a conversion level of up to about 60 percent of n-hexane is obtained and converted to a rate constant per unit volume of zeolite and compared with that of silica-alumina catalyst which is normalized to a reference activity of 540°C (1000°F). Catalytic activity of the catalyst is expressed as a multiple of this standard, i.e., the silica-alumina standard which has a rate constant of 0.016 sec$^{-1}$ in conversion of n-hexane at 540°C. The silica-alumina reference catalyst contains about 10 weight percent $Al_2O_3$ and the remainder $SiO_2$. This method of determining alpha, modified as described above, is more fully described in the Journal of Catalysis, Vol. VI, pages 278–287, 1966.

Metallosilicates such as aluminosilicates comprise both natural and synthetic materials as well as both amorphous and crystalline materials. Examples of aluminosilicates include zeolites, clays, gels, and amorphous silica-aluminas.

Zeolites are crystalline metallosilicates composed of a rigid 3-dimensional framework of $SiO_4$ and $MO_4$ tetrahedra wherein M is, for example, aluminum or gallium, wherein the tetrahedra are cross-linked by the sharing of oxygen atoms such that the ratio of the total M and silicon atoms to oxygen is 1:2. The electrovalence of the tetrahedra containing aluminum is balanced by the inclusion in the crystal of a cation, for example, an alkali metal or an alkaline earth metal cation. This can be expressed wherein the ratio of metal M to the number of various cations, such as Ca/2, Sr/2, Na, K or Li is equal to unity. One type of cation may be exchanged either entirely or partially by another type of cation utilizing ion exchange techniques in a conventional manner. By means of such cation exchange, it has been possible to vary the properties of a given zeolite by suitable selection of the cation. By substituting boron within the framework of a metallosilicate wherein the metal has a valence of +3, it is possible to alter the acidic activity with minimal effect upon the ion exchange activity. This is achieved by virtue of the identity of charge between the metal atom and its boron substituent. Such replacement permits greater control over deactivation of a zeolite resulting in the formation of catalysts useful in reactions which require low acidic activity. Such materials are also particularly suitable in the preparation of dual function catalysts such as those used in hydroisomerization processes.

Prior art techniques have resulted in the formation of a great variety of synthetic zeolites. These zeolites have come to be designated by letter or other convenient symbols, as exemplified by zeolite A (U.S. Pat. No. 2 882 243), zeolite X (U.S. Pat. No. 2 882 244), zeolite Y (U.S. Pat. No. 3 130 007), ZK-5 (U.S. Pat. No. 3 247 195, ZK-4 (U.S. Pat. No. 3 314 752), zeolite beta (U.S. Pat. No. 3 308 069), ZSM-5 (U.S. Pat. No. 3 702 886), ZSM-11 (U.S. Pat. No. 3 709 979), ZSM-12 (U.S. Pat. No. 3 832 449) ZSM-23 (U.S. Pat. No. 4 076 842), ZSM-35 (U.S. Pat. No. 4 016 245), ZSM-38 (U.S. Pat. No. 4 046 859) and ZSM-48 (U.S. Pat. No. 4 375 573).

ZSM-5, ZSM-11, ZSM-12, ZSM-23, ZSM-35, ZSM-38, ZSM-48 and zeolite beta are shape selective materials having a high silica content and in particular are aluminosilicates having a silica to alumina mole ratio of at least 12. ZSM-5, ZSM-11, ZSM-12, ZSM-23, ZSM-35, ZSM-38, and ZSM-48 materials also have a Constraint Index within the range of about 1–12. A discussion of Constraint Index may be found in U.S. Patent No. 4 049 573.

The boron trihalide employed in the present process is selected from boron trifluoride, boron trichloride, boron tribromide, and boron triiodide, with boron trichloride and boron tribromide being particularly preferred.

The temperature at which demetallation and boron substitution occurs should be high enough to effect removal through vaporization of the metal halide formed. Such temperatures may range from 100 to 600°C, with the preferred range ranging from 300–500°C. The boron trihalide is contacted with the zeolite material at the above elevated temperatures for a sufficient time to effect substitution of the boron atoms from the boron trihalide into the zeolitic framework. Such exposure times vary according to the temperature employed, but may readily be determined by experimental observation. Such exposure times may vary from 0.5 to 6 hours. The boron trihalide may be mixed with an inert diluent such as nitrogen in volume ratios ranging from 1 to 100, more preferably 2 to 20, volumes of nitrogen per volume of boron trihalide. It is also preferred that the zeolite treated by the present process is in a form substantially free of alkali metal, i.e., containing less than about 1.5 wt.% alkali metal and preferably having at least a portion of the original cations associated therewith replaced by hydrogen.

Reaction of the zeolite with the boron trihalide is effected by contacting the zeolite with such compound. Where the boron trihalide is a liquid, such compound can be in solution in a solvent at the time of contact. Any solvent relatively inert with respect to the treating compound in the zeolite may be employed. The treating compound may also be used without a solvent, i.e. may be used as a neat liquid. Where the treating compound is in the gaseous phase, the treating compound can be used by itself or it can be used in admixture with a gaseous diluent relatively inert to the treating compound and the zeolite such as helium or nitrogen.

Prior to reacting the zeolite with the boron trihalide, the zeolite may be dried. Drying can be effected in the presence of air. Elevated temperatures may also be employed provided they do not result in the destruction of the crystallinity of the zeolite.

After contact of a zeolite with the boron trihalide has ceased, the zeolite may be flushed with an inert gas such as nitrogen for a period ranging from 0.5 to 6 hours.

The invention will now be more particularly described with reference to following examples.

## EXAMPLE 1

A sample of ZSM-5 in the hydrogen form was prepared by deammoniation of ammonium ZSM-5 having a silica to alumina mole ratio of about 70 and a crystal size ranging from 0.02–0.05 micrometre. The HZSM-5 was then treated with boron trichloride in a nitrogen flow (1.2 liters $BCl_3$ per hour: 6.0 liters $N_2$ per hour) for about 1 hour at 500°C. The resulting material was then flushed with nitrogen for about 1 hour and ammonium-exchanged using an ammonium chloride/ammonium hydroxide solution. The initial alpha value of the HZSM-5 was reduced from 116 to 25 after the boron trihalide treatment indicating a decrease in acidic catalytic activity. Ammonia desorption from the same sample indicated that framework aluminum was replaced by boron. Thus, the boron trihalide exposed material exhibited a low temperature ammonia release at about 185°C characteristic of the deammoniation of ammonium borosilicates. In addition, the high temperature ammonia evolution due to aluminum acidic sites was correspondingly decreased.

## EXAMPLE 2

This example illustrates that net framework substitution of zeolite metals by trivalent halides is dependent upon the type of trivalent halide used.

Two samples of HZSM-5 having a 70 to 1 silica to alumina mole ratio were treated under the conditions of Example 1 with different trivalent halides. One sample utilized boron trichloride while the other sample was treated with phosphorous trichloride. The characteristics of the resulting materials are given in Table 1 below.

### Table 1

| Reagent | alpha value initial | final | % Al initial | % Al final | Exchange capacity initial meq/g | Exchange capacity final meq/g |
|---------|---------|-------|------|-------|------------------|------------------|
| $BCl_3$ | 116 | 25 | 1.17 | 0.45 | 0.42 | 0.40 |
| $PCl_3$ | 116 | 115 | 1.17 | 1.13 | 0.42 | 0.56 |

A comparison of the products of the two treatments indicates that phosphorous trichloride is largely ineffective for substitution of framework aluminum in a zeolite material.

## EXAMPLE 3

5 gm of an as-synthesized ZSM-5 sample having a silica to alumina ratio of 70 was heated in an $N_2$ stream to 500°C and $BBr_3$ was then introduced into the $N_2$ stream. Passage of the $BBr_3$ was continued for one hour and the treated zeolite was then flushed with $N_2$ for a further two hours. After cooling, the treated zeolite was ammonium exchanged with 1M $NH_2Cl$ solution. A comparison of the initial and final products is given in Table 2.

### Table 2

|  | Initial zeolite | Treated zeolite |
|---|---|---|
| Al Content | 1.10% wt. | 0.58% wt. |
| B Content | 0 | 4.3% |
| alpha value | 300 | 159 |

**Claims**

1. A process for deactivation that is, reduction in cracking activity, of a metallosilicate zeolite which comprises contacting said zeolite with a boron trihalide at a temperature sufficient to effect replacement of at least some of the framework metal atoms with boron atoms.
2. The process of claim 1 wherein said zeolite is an aluminosilicate.
3. The process of Claim 2 wherein the zeolite has a silica to alumina ratio less than 1000.
4. The process of Claim 2 wherein the zeolite has a silica to alumina ratio less than 500.
5. The process of any one of Claims 2 to 4 wherein said zeolite has a silica to alumina ratio of at least 12.
6. The process of Claim 5 wherein said zeolite is selected from the group consisting of zeolite beta, ZSM-5, ZSM-11, ZSM-12, ZSM-23, ZSM-35, ZSM-38 and ZSM-48.
7. The process of any preceding claim wherein said boron trihalide is selected from boron trichloride and boron tribromide.
8. The process of any preceding claim wherein said temperature ranges from 100 to 600°C.
9. The process of Claim 8 wherein said temperature ranges from 300 to 500°C.

**Patentansprüche**

1. Verfahren zur Deaktivierung, d.h. zur Reduzierung der Crackaktivität eines Metallsilicatzeoliths, bei dem dieser Zeolith bei einer ausreichenden Temperatur mit Bortrihalogenid in Kontakt gebracht wird, um den Austausch zumindest eines Teils der Gittermetallionen durch Boratome durchzuführen.
2. Verfahren nach Anspruch 1, worin der Zeolith ein Aluminosilicat ist.
3. Verfahren nach Anspruch 2, worin der Zeolith ein Siliciumdioxid/Aluminiumoxid-Verhältnis von weniger als 1000 aufweist.
4. Verfahren nach Anspruch 2, worin der Zeolith ein Siliciumdioxid/Aluminiumoxid-Verhältnis von weniger als 500 aufweist.
5. Verfahren nach einem der Ansprüche 2 bis 4, worin der Zeolith ein Siliciumdioxid/Aluminiumoxid-Verhältnis von mindestens 12 aufweist.
6. Verfahren nach Anspruch 5, worin der Zeolith aus der Gruppe ausgewählt ist, die aus Zeolith Beta, ZSM-5, ZSM-11, ZSM-12, ZSM-23, ZSM-35, ZSM-38 und ZSM-48 besteht.
7. Verfahren nach einem der vorstehenden Ansprüche, worin das Bortrihalogenid aus Bortrichlorid und Bortribromid ausgewählt ist.
8. Verfahren nach einem der vorstehenden Ansprüche, worin die Temperatur im Bereich von 100 bis 600°C liegt.
9. Verfahren nach Anspruch 8, worin die Temperatur im Bereich von 300 bis 500°C liegt.

**Revendications**

1. Un procédé de désactivation, à savoir de réduction de l'activité de craquage, d'une zéolite à base de métallosilicate, qui consiste à mettre ladite zéolite au contact d'un trihalogénure de bore, à une température suffisante pour produire le remplacement d'au moins une partie des atomes de métal de la structure par des atomes de bore.
2. Le procédé selon la revendication 1, dans lequel ladite zéolite est un aluminosilicate.
3. Le procédé selon la revendication 2, dans lequel la zéolite présente un rapport silice/alumine inférieur à 1000.
4. Le procédé selon la revendication 2, dans lequel la zéolite présente un rapport silice/alumine inférieur à 500.

5. Le procédé selon l'une quelconque des revendications 2 à 4, dans lequel ladite zéolite présente un rapport silice/alumine d'au moins 12.

6. Le procédé selon la revendication 5, dans lequel ladite zéolite est choisi dans le groupe comprenant la zéolite béta, la ZSM-5, la ZSM-11, la ZSM-12, la ZSM-23, la ZSM-35, la ZSM-38 et la ZSM-48.

7. Le procédé selon l'une quelconque des revendications précédentes, dans lequel le trihalogénure de bore consiste soit en trichlorure de bore, soit en tribromure de bore.

8. Le procédé selon l'une quelconque des revendications précédentes, dans lequel ladite température est comprise entre 100 et 600°C.

9. Le procédé selon la revendication 8, dans lequel ladite température est comprise entre 300 et 500°C.